# EUROPEAN PATENT APPLICATION

(11) **EP 2 177 927 A1**
(43) Date of publication of application: **21.04.2010**
(21) Application number: 09012833.1
(22) Date of filing: 09.10.2009
(51) Int. Cl.: G01S 1/00

(54) **Method and system for rough initial position for GNSS assistance data in a communication network**

(30) Priority: 14.10.2008 US 251107
(71) Applicant: Broadcom Corporation, Irvine, CA 92617 (US)
(72) Inventor: Del Castillo, Manuel, 28016 Madrid (ES); Kosolobov, Andrei, San Jose, CA 95136 (US)
(74) Representative: Jehle, Volker Armin

(57) **Abstract**

A method and system is presented for a global navigation satellite system (GNSS) enabled WCDMA handset to receive reference locations from a network location server based on RNC geographic service areas. The GNSS enabled WCDMA handset may generate a location request comprising an RNC ID and may determine its location based on the received reference location and/or received GNSS assistance data. The RNC geographic service area and/or an area of uncertainty may comprise one or more of a latitude, a longitude and uncertainty value. Accuracy of the RNC geographic service area and/or the area of uncertainty may be increased over time. The RNC service area may be determined by the network location server based on an average of a plurality of handset locations that are reported by handsets that are served by the RNC. Handset location reports may comprise the RNC ID.

## Description

### CROSS-REFERENCE TO RELATED APPLICATIONS/INCORPORATION BY REFERENCE

Not applicable.

### FIELD OF THE INVENTION

Certain embodiments of the invention relate to communication systems. More specifically, certain embodiments of the invention relate to a method and system for area code rough initial position for GNSS assistance data in a communication network.

### BACKGROUND OF THE INVENTION

The market for location-based services (LBS) is potentially tremendous. One of the driving forces behind the LBS market is the integration of a global navigation satellite system (GNSS) receiver such as a GPS receiver into communication device such as a mobile phone. During operation, mobile phones may change their locations rather quickly and may sometimes be out of range of various satellites for extended periods. As a result, the integrated global navigation satellite system receiver has to quickly acquire a position fix and also be capable of operating in harsh signal propagation environments with low power consumption.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for area code rough initial position for GNSS assistance data in a communication network, substantially as shown in and/or described in connection with at least one of the figures, as set forth more completely in the claims.
According to an aspect, a method for communication is provided, the method comprising:
receiving from a network location server by a GNSS enabled WCDMA handset, a reference location and/or GNSS assistance data wherein said reference location and/or GNSS assistance data is determined by said network location server based on a geographic service area of an RNC serving said GNSS enabled WCDMA handset and/or area of uncertainty for said RNC; and
determining a location of said GNSS enabled WCDMA handset based on said received reference location and/or GNSS assistance data.
Advantageously, said geographic service area of said RNC and/or said area of uncertainty for said RNC are determined by said network location server based on an average of a plurality of reported locations of handsets served by said serving RNC.
Advantageously, said plurality of reported locations of handsets comprises an identifier of said serving RNC.
Advantageously, an accuracy of said geographic service area of said RNC and/or said area of uncertainty for said RNC are increased based on reported locations of one or more handsets served by said serving RNC.
Advantageously, said geographic service area of said RNC and/or said area of uncertainty for said RNC comprises one or more of a latitude, a longitude and uncertainty value.
Advantageously, the method further comprises acquiring said geographic service area of said RNC and/or said area of uncertainty for said RNC based on a an ID and/or an RNC-ID area code.
Advantageously, the method further comprises generating by said GNSS enabled WCDMA handset, a location request comprising an identifier of said RNC.
Advantageously, said network location server acquires information utilized to determine said geographic service area of said RNC and/or said area of uncertainty for said RNC from an assistance server.
According to an aspect, a machine-readable storage is provided having stored thereon, a computer program having at least one code section for communication, the at least one code section being executable by a machine for causing the machine to perform steps comprising:
receiving from a network location server by a GNSS enabled WCDMA handset, a reference location and/or GNSS assistance data wherein said reference location and/or GNSS assistance data is determined by said network location server based on a geographic service area of an RNC serving said GNSS enabled WCDMA handset and/or area of uncertainty for said RNC; and
determining a location of said GNSS enabled WCDMA handset based on said received reference location and/or GNSS assistance data.
Advantageously, said geographic service area of said RNC and/or said area of uncertainty for said RNC are determined by said network location server based on an average of a plurality of reported locations of handsets served by said serving RNC.
Advantageously, said plurality of reported locations of handsets comprise an identifier of said serving RNC.
Advantageously, an accuracy of said geographic service area of said RNC and/or said area of uncertainty for said RNC are increased based reported locations of one or more handsets served by said serving RNC.
Advantageously, said geographic service area of said RNC and/or said area of uncertainty for said RNC comprises one or more of a latitude, a longitude and uncertainty value.
Advantageously, said at least one code section comprises code for acquiring said geographic service area of said RNC and/or said area of uncertainty for said RNC based on a an ID and/or an RNC-ID area code.
Advantageously, said at least one code section comprises code for generating by said GNSS enabled WCDMA handset, a location request comprising an identifier of said RNC.
Advantageously, said network location server acquires information utilized to determine said geographic service area of said RNC and/or said area of uncertainty for said RNC from an assistance server.
According to an aspect, a system for communication comprises:
one or more processors in a GNSS enabled WCDMA handset, wherein said one or more processors are operable to receive from a network location server, a reference location and/or GNSS assistance data wherein said reference location and/or GNSS assistance data is determined by said network location server based on a geographic service area of an RNC serving said GNSS enabled WCDMA handset and/or area of uncertainty for said RNC; and
said one or more processors are operable to determine a location of said GNSS enabled WCDMA handset based on said received reference location and/or GNSS assistance data.
Advantageously, said geographic service area of said RNC and/or said area of uncertainty for said RNC are determined by said network location server based on an average of a plurality of reported locations of handsets served by said serving RNC.
Advantageously, said plurality of reported locations of handsets comprise an identifier of said serving RNC.
Advantageously, an accuracy of said geographic service area of said RNC and/or said area of uncertainty for said RNC are increased based reported locations of one or more handsets served by said serving RNC.
Advantageously, said geographic service area of said RNC and/or said area of uncertainty for said RNC comprises one or more of a latitude, a longitude and uncertainty value.
Advantageously, said one or more processors are operable to acquire said geographic service area of said RNC and/or said area of uncertainty for said RNC based on a an ID and/or an RNC-ID area code.
Advantageously, said one or more processors are operable to generate by said GNSS enabled WCDMA handset, a location request comprising an identifier of said RNC.
Advantageously, said network location server acquires information utilized to determine said geographic service area of said RNC and/or said area of uncertainty for said RNC from an assistance server.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary geo-location system, in accordance with an embodiment of the invention.

FIG. 2 is a diagram illustrating an exemplary GPS enabled WCDMA handset, in accordance with an embodiment of the invention.

FIG. 3 is a diagram illustrating estimated locations and uncertainty for three RNC serving areas, in accordance with an embodiment of the invention.

FIG. 4 is a flow diagram illustrating an exemplary network initiated location determination exchange comprising RNC-ID and location data and utilizing a SUPL interface, in accordance with an embodiment of the invention.

FIG. 5 is a flow diagram illustrating an exemplary handset initiated location determination exchange comprising RNC-ID and location data and utilizing a SUPL interface, in accordance with an embodiment of the invention.

### DETAILED DESCRIPTION OF THE INVENTION

Aspects of the invention may be found in a method and system for area code rough initial position for GNSS assistance data in a communication network. A global navigation satellite system (GNSS) enabled WCDMA handset may be enabled to receive a reference location and/or GNSS assistance data from a network location server. The reference location and/or GNSS assistance data may be determined by the network location server. The reference location may be determined based on a geographic service area and/or area of uncertainty of a radio network controller (RNC) that may be serving the GNSS enabled WCDMA handset. The network location server may acquire information utilized to determine the geographic service area of the RNC and/or the area of uncertainty from an assistance server. The geographic service area of the RNC and/or the area of uncertainty may be utilized when retrieving assistance from, for example, an AGPS server for determining a location of a GPS enabled WCDMA handset that may be served by the respective RNC.

The GNSS enabled WCDMA handset may be enabled to determine its location based on the received reference location and/or GNSS assistance data from the location server. For example, the GNSS enabled WCDMA handset may generate a request comprising an RNC identifier, to initiate determination of the handset location with the location server. In this regard, the RNC-ID may be communicated to the location server within the request for location determination. For example, the RNC-ID may be embedded within a location ID along with, for example, a cell-ID, mobile network code (MNC) and/or mobile country code (MCC). The RNC-ID may be represented as an area code.

A geographic service area of the corresponding RNC may be determined by the network location server. The RNC service area may be determined based on a statistical distribution of a plurality of handset locations reported to the location server by one or more handsets that are served by the RNC. The geographic service area of the RNC and/or an area of uncertainty may be represented by latitude, longitude and/or an uncertainty value. In various embodiments of the invention, the RNC geographic service area and/or area of uncertainty may be represented by a latitude, longitude and a radius that may extend from the latitude and longitude and that may define the area of a circle around the latitude and longitude. In another exemplary embodiment of the invention, the RNC geographic service area may be represented by an ellipse with a major axis value a minor axis value. Accuracy of the geographic service area of the RNC and/or the area of uncertainty may be increased or decreased based on additional handset location reports.

Handset location reports from one or more of the plurality of handsets may comprise the RNC-ID which may be represented as an area code and/or a time stamp. In this manner, the location server may determine an RNC serving area based on one or more samples of handset positions that were determined over a specified range of time. For example, handset locations time stamped after a new base station has been added to an RNC may be utilized to determine the RNC serving area.

The geographic service area of the RNC and/or the area of uncertainty may be stored and/or retrieved from a location server database based on a specified RNC-ID and/or an area code that may represent an RNC-ID, for example. The database may be generated and/or updated as handset locations are reported to the network location server over time. The database may also comprise cellsite IDs and corresponding cellsite based reference locations and/or mobile country codes (MCC) and MCC based reference locations when they are available. The cellsite ID may be the same as the basestation ID. The RNC based reference locations may be utilized instead of or in consort with cellsite based and/or MCC based reference locations when cellsite based reference locations may not be available and/or may not be reliable to a high level of confidence. For example, the RNC based reference locations may be utilized when an MCC reference location has an uncertainty greater than 1800 km. In another exemplary embodiment of the invention, an RNC based reference location may be utilized when a cellsite based reference location may not be reliable and an MCC based reference location may be utilized when the cellsite and/or RNC based reference locations are not reliable.

In an exemplary embodiment of the invention, an area code and/or RNC-ID database may be generated and modified over time based on handset location reports. An RNC service area may be determined from the time stamped handset location reports received from a plurality of selected active cell sites served by the RNC. The active cell sites may have contributed handset location reports to the database not more than a specified time earlier. The RNC service area may be determined based on a statistical distribution of the reported handset positions. The RNC uncertainty area may be determined based on a percentage increase in area and/or dimension of the determined statistical distribution. For example, the RNC service area plus the area of uncertainty may cover the handset locations reported by the selected active cell sites plus a specified percentage increase. In instances when an uncertainty becomes greater than a specified level, for example, greater than 1800 km, an area code may be designated as unusable until it is improved. Moreover, in instances when an uncertainty value falls below a specified level, for example 110 km, a specified minimum value may be utilized. In this manner, the geographic service area of the RNC and/or the area of uncertainty may be utilized as a reference location and/or a coarse handset location when determining the location of the GPS enabled WCDMA handset.

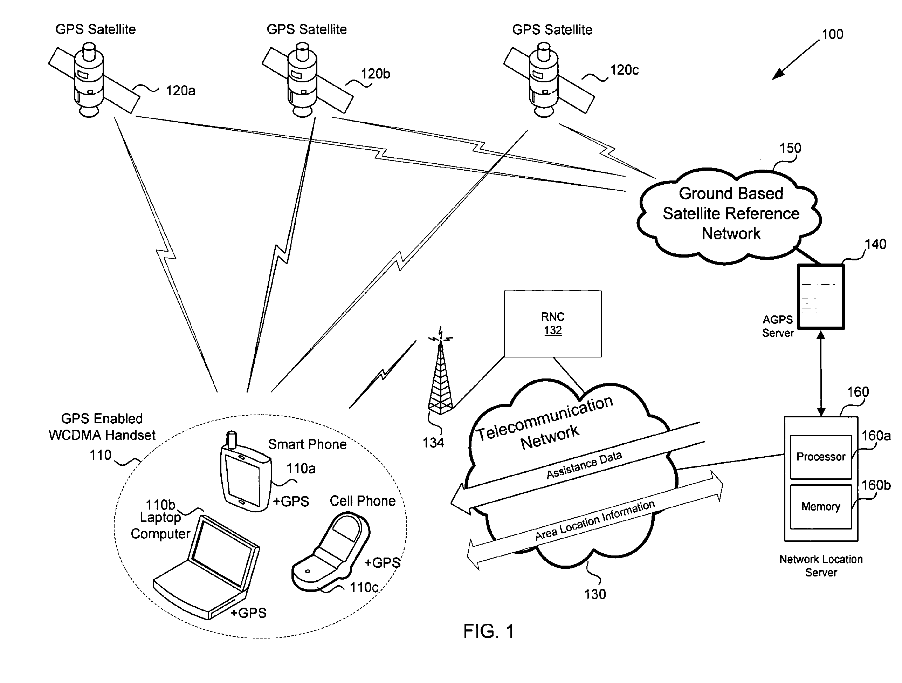

FIG. 1 is a diagram illustrating an exemplary geo-location system, in accordance with an embodiment of the invention. Referring to FIG. 1, there is shown an assisted GPS (AGPS) satellite navigation system 100, comprising a GPS enabled WCDMA handset 110, a plurality of satellites, of which satellites 120a, 120b, and 120c may be illustrated, a WCDMA enabled telecommunications network 130, an radio network controller (RNC) 132, a WCDMA enabled cell site 134, an AGPS server 140, a ground based reference network 150 and a network location server 160. The network location server 160 may comprise a processor 160a and a memory 160b.

The GPS enabled WCDMA handset 110 may comprise suitable logic circuitry and/or code that may be enabled to receive satellite transmission signals from the GPS satellites 120a through 120c to determine the position of the GPS enabled WCDMA handset 110. Exemplary GPS enabled WCDMA handsets 110 may be the smart phone 110a, laptop computer 110b and/or the cell phone 110c. The GPS enabled WCDMA handset 110 may be capable of transmitting and/or receiving radio signals to and/or from the WCDMA enabled operator network 130 via the WCDMA enabled cell site 134 and RNC 132. The GPS enabled WCDMA handset 110 may initiate location determination and/or may respond to network initiated location determination. The GPS enabled WCDMA handset 110 may be capable of a plurality of location determination methods, for example, location ID, autonomous GPS, AGPS handset assisted, AGPS handset based, enhanced cell/sector, advanced forward link trilateration (AFLT), enhanced observed time difference (EOTD) and/or observed time difference of arrival (OTDOA). Although a GPS enabled WCDMA handset 110 is illustrated, the invention is not so limited. Accordingly, the GPS enabled WCDMA handset 110 may be operable to utilize any of a plurality of wireless communication technologies, may be any other type of communication device, and may utilize other GNSS technologies such as Galileo and GLONASS.

In instances when the GPS enabled WCDMA handset 110 may be located within the cell site 134 serving area, the GPS enabled handset 110 may determine its location, time-stamp the determined location and may send location information to the network location server 160 for storage in a reference position database. The location information may comprise, for example, a Cell-ID of the serving cell site 134, an RNC-ID for the serving RNC 132, a Mobile Network Code (MNC) of an associated operator network, Mobile Network Code (MCC) of an associated country. The location information may also be stored inside the WCDMA GPS enabled handset 110. The stored location information may be utilized as a reference position for retrieving data from the AGPS server 140 as well as for position determination calculations. In addition, the stored location information may be utilized to determine an estimated location for the RNC 132 serving area.

The handset location information and/or estimated location for RNC 132 serving area information may communicated between the GPS enabled WCDMA handset 110 and location server 160 via an operator network such as the telecommunication network 130. Location information may be reported on an as needed basis and the reporting may occur aperiodically and/or periodically. The estimated RNC 132 serving area location information may be utilized when a location for a serving cell site is unknown. For example, the estimated RNC 132 serving area location may be used as a reference position for retrieving assistance from the AGPS server 140 or for a rough initial position. In this regard, the estimated RNC position may be utilized by the AGPS server 140 to determine the satellites in the view of the GPS enabled WCDMA handset 110 and additional ephemeris information. By providing ephemeris information, the time to first fix may be dramatically reduced.

The GPS satellites 120a through 120c may comprise suitable logic, circuitry and/or code that may be enabled to generate and broadcast suitable radiofrequency signals. The broadcast RF signals may be received by a GPS satellite receiver integrated in the GPS enabled WCDMA handset 110. The received broadcast RF signals may be utilized to determine a navigation information comprising, for example, position, velocity, and clock information of the GPS enabled handset 110.

The WCDMA enabled telecommunications network 130 may comprise suitable logic, circuitry and/or code that may be enabled to provide various data services on a large-scale basis by using WCDMA and/or other technologies such as Ethernet, GSM, UMTS, WiFi, or WiMAX. The WCDMA enabled telecommunications network 130 may support a wired high-speed connection such as an Ethernet connection, and/or may support one or more wireless network technologies such as, for example, WCDMA and GSM, WiFi, or WiMAX.

The AGPS server 140 may comprise suitable logic, circuitry and/or code that may enable access to a GPS reference network, for example, the ground based reference network 150, to collect GPS satellite data and track GPS constellations. In addition, the AGPS server 140 may be communicatively coupled with network location server 160. The AGPS server 140 may be enabled to generate assistance data, which may be communicated via the network location server 160 and WCDMA enabled telecommunications network 130 to the GPS enabled WCDMA handset 110 such as the cell phone 110c to compute its location. In addition, the AGPS server 140 may be enabled to use Long Term Orbits (LTO™) to supply accurate ephemeris assistance data that may be valid for, for example, up to 10 days in the future. This may enable the benefits of AGPS technology to be realized by the GPS enabled WCDMA handset 110 when the handset may temporarily be out of operator network range. The AGPS server 140 may support messaging in one or more exemplary formats compatible with telecommunication networks such as GSM/UMTS, and/or WiFi, and/or WiMAX. For example, the AGPS server 140 may be GSM/UMTS standard compliant by supporting messaging in RRLP format, PCAP interface and OMA SUPLv1.0.

The AGPS server 140 may be configured to communicate via either user-plane and/or control-plane connectivity with the network location server 160. The AGPS server 140 may receive the estimated location for the RNC 132 serving area from the network location server 160. In this regard, the AGPS server 140 may download assistance data such as ephemeris data for the current satellites in view based on the estimated location for the RNC 132 serving area and may generate assistance data accordingly. In addition, the GPS enabled handset 110 may upload its location information to the network periodically and/or as needed to ensure that the location information on the network location server 160 and corresponding estimated location for the RNC 132 serving area provided to the AGPS server 140 may be up-to-date.

The ground based reference network 150 may comprise suitable logic, circuitry and/or code that may be enabled to collect and distribute data for GPS satellites on a continuous basis. The ground based reference network 150 may be communicatively coupled to the AGPS server 140. The ground based reference network 150 may comprise a plurality of GPS reference receivers to provide assistance data for AGPS enabled devices such as the GPS enabled WCDMA handset 110. The ground based reference network 150 may ensure high levels of availability, reliability, and performance.

The network location server 160 may comprise suitable logic, circuitry and/or code that may be enabled to support location determination and/or communication for devices such as the GPS enabled WCDMA handset 110. For example the network location server 160 may support handset initiated and/or network location determination as well as handset based and/or handset assisted location determination. The location server 160 may communicate via user plane and/or control plane methods with the GPS enabled WCDMA handset 110. For example, the location server 160 may communicate with the GPS enabled WCDMA handset 110 utilizing user plane methods via a wireless packet data network or SMS and may utilize various positioning protocols such as location ID positioning and/or radio resource location services positioning (RRLP). Moreover, the location server 160 may communicate with the GPS enabled WCDMA handset 110 utilizing control plane methods via circuit switched and/or packet switched wireless signaling.

The processor 160a may comprise suitable logic, circuitry and/or code to support various positioning methods, for example, based on an estimated RNC-ID and/or a corresponding RNC serving area. In addition, the processor 160a may support Cell-ID, Enhanced Cell/Sector, autonomous GPS or other GNSS, Advanced Forward Link Trilateration (AFLT), and Time Difference of Arrival (TDOA). The processor 160a may be enabled to convert a location ID received from a GPS enabled WCDMA handset 110 comprising for example, a serving cell-ID, RNC-ID, MNC and/or MCC to an estimated location for the respective RNC's serving area. For example, the estimated location may be for RNC 132's serving area and may comprise latitude, longitude and/or uncertainty value corresponding to a geographical area served by the RNC 132. In this regard, the processor 160a may maintain a database within the memory 160b. The database may comprise location information that was reported by a plurality of handsets for a plurality of handset locations. For each of the plurality of handset locations, the respective handset location information may comprise determined latitude and longitude and a location ID associated with the respective handset at or near the time of the location determination. In this manner the database may associate an RNC-ID for the RNC 132 from within a location ID with one or more determined locations.

The processor 160a may be operable to determine an estimated location for the RNC 132 serving area based on a plurality of handset locations determined while the respective handsets were served by the RNC 132. For example, the processor 160 may take an average of the handset locations determined while the respective handsets were served by RNC 132. In addition, the processor 160 may estimate an area of uncertainty based on, for example, the density of cell sites served by the RNC 132. In this manner, the network location server 160 may provide a rough estimate of the location of a handset based on an estimated location area for a serving RNC when the location of a serving cell site may be unknown. For example, in instances where the network location server 160 may receive a message comprising a RNC-ID for RNC 132 from the GPS enabled WCDMA handset 110, the processor 160a may be enabled to determine that the current position of the GPS enabled WCDMA handset 110 may be somewhere in an area indicated by the received RNC-ID.

The memory 160b may comprise suitable logic, circuitry, and/or code that enable storage of information such as the database utilized for determining RNC serving areas as well as executable instructions and other data that may be utilized by the processor 160a. The executable instructions may comprise algorithms that may be enabled to calculate navigation information using the acquired satellite signals automatically or upon request/signaled. The data may comprise various latitude and longitude (LAT/LON) of a plurality communication devices associated with the network location server 160. The memory 160b may comprise RAM, ROM, low latency nonvolatile memory such as flash memory and/or other suitable electronic data storage.

The network location server 160 may be enabled to connect to the AGPS server 140 to acquire AGPS assistance data and transmit the acquired AGPS assistance data to one or more GPS enabled receivers to implement the AGPS technique. Communications among the network location server 160, the AGPS server 140, and/or the one or more GPS enabled receivers may be in either user-plan or control-plan via various technologies, whether wireless or wired.

In operation, an RNC serving area may be utilized as a rough initial position or reference location for WCDMA handsets. In this regard, an RNC 132 serving area may be estimated based on a plurality of determined locations of one or more handsets that are served by the RNC 132. For example, an average latitude and longitude for the determined handset locations and an uncertainty value may enable estimation of an area served by the RNC 132. An exemplary handset may be the GPS enabled WCDMA handset 110. A reference location database stored and maintained within the network location server 160 may enable association of the RNC 132 estimated serving area with an data representing the RNC 132, for example, an area code representing the RNC 132 or the RNC-ID and/or other information from the location ID such as cell ID, MNC and/or MCC. The reference location database may be updated when additional determined handset locations are received by the location server 160. Also, the estimated RNC serving areas may be re-calculated, updated and/or improved as additional location information is added to the database. The database updates may be done on a periodic basis or may be managed. In this manner, an initial rough estimate of the position of a WCDMA handset may be provided to a handset and/or the AGPS server 140 in instances when the location of the serving cell site is unknown.

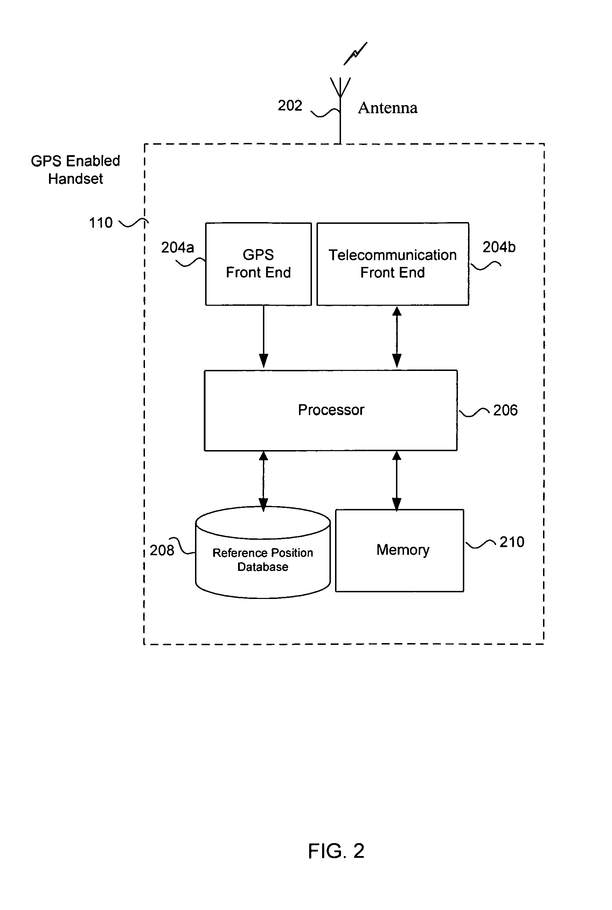

FIG. 2 is a diagram illustrating an exemplary GPS enabled WCDMA handset, in accordance with an embodiment of the invention. Referring to FIG. 2, there is shown the GPS enabled handset 110 comprising an antenna 202, a GPS front end 204a, a telecommunication front end 204b, a processor 206, a reference position database 208, and a memory 210.

The antenna 202 may comprise suitable logic, circuitry and/or code that may be enabled to receive L band signals from a plurality of GPS satellites such as the GPS 120a through 120c and may be capable of transmitting and/or receiving radio signals over, for example, the Bluetooth radio communication system, for communications among Bluetooth devices.

The GPS front end 204a may comprise suitable logic, circuitry and/or code that may be enabled to receive GPS satellite broadcast signals via the antenna 202 and convert them to GPS baseband signals, which may be suitable for further processing by the processor 206 for a navigation solution, whether GPS based or AGPS based.

The telecommunication front end 204b may comprise suitable logic, circuitry and/or code that may be enabled to transmit and/or receive radio signals over a telecommunication network such as a Bluetooth network via the antenna 202 and convert them to corresponding baseband signals, which may be suitable for further processing in the processor 206.

The processor 206 may comprise suitable logic, circuitry and/or code that may be enabled to process received satellite signals as well as signals received from a telecommunication network. The processor 206 may be configured to extract navigational information from each received satellite signal to compute a position for the GPS enabled handset 110. The processor 206 may be programmed to calculate the position by using both local GPS measurements and AGPS assistance data. In instances when LTO AGPS assistance data may be available, the processor 206 may be enabled to calculate reference positions for GPS calculations based on the LTO AGPS assistance data and previous reference positions stored inside the GPS enabled handset 110.

The reference position database 208 may comprise suitable logic, circuitry, and/or code that may be operable to manage and store data comprising reference positions. The contents in the reference position database 208 may be used as reference positions for GPS calculations of the GPS enabled handset 110. The contents in the reference position database 208 may be updated as needed and/or periodically.

The memory 210 may comprise suitable logic, circuitry, and/or code that may enable storing of information such as executable instructions and data that may be utilized by the processor 206. The executable instructions may comprise algorithms that may be enabled to calculate a position using local GPS measurements or combined with the LTO AGPS assistance data from the AGPS server 140. The data may comprise local GPS measurements and LTO AGPS assistance data. The local GPS measurements may be associated to the satellite signals directly received from the GPS satellite 120a through 120c. The LTO AGPS assistance data may be received from the AGPS server 140 and received through the telecommunication front end 204b via the telecommunication network 130. The memory 210 may comprise RAM, ROM, low latency nonvolatile memory such as flash memory and/or other suitable electronic data storage.

In operation, a plurality of signals may be received at the antenna 202, which is coupled to the GPS enabled handset 110. The received plurality of signals may be measured and communicated to the GPS front end 204a or the telecommunication front end 204b, respectively, depending on the type of received signals. The GPS front end 204a may convert the received GPS signals into corresponding baseband signals and pass to the processor 206. The telecommunication front end 204b may convert the received telecommunication signals into corresponding baseband signals and pass to the processor 206. The received telecommunication signals may comprise AGPS assistance data from the AGPS server 140. The received AGPS assistance data may be stored in the memory 210. In instances where the user of the GPS enabled handset 110 may need to calculate its position, the processor 206 may be enabled to access the contents in the reference position database 208, and determine a position of the GPS enabled handset 110 based on the AGPS assistance data stored in the memory 210, and the local GPS measurements from the GPS front end 204a. The processor 206 may be operable to store and update information on reference positions into the reference position database 208. The reference positions may be obtained via the telecommunication network 130, or may be calculated by the processor 206. The processor 206 may use various algorithms to calculate reference positions for the GPS enabled handset 110 by combining the AGPS assistance data with previous reference positions stored in the reference position database 208.

In an exemplary embodiment of the invention, the GPS enabled WCDMA handset 110 may communicate with the network location server 160 utilizing user plane methods via a wireless packet data network or via SMS and may utilize various positioning protocols such as location ID positioning and/or radio resource location services positioning (RRLP). Moreover, the GPS enabled WCDMA handset 110 may communicate with the location server 160 utilizing control plane methods via circuit switched and/or packet switched wireless signaling. In various embodiments of the invention, the GPS enabled WCDMA handset 110 may provide a location ID to the network location server 160 as a parameter in a user plane or control plane position determination interface. For example, for a location user plane (Lup) location determination interface, the GPS enabled WCDMA handset 110 may provide WCDMA Cell Info comprising WCDMA Cell ID, mobile country code (MCC), mobile network code (MNC) and/or cell identity (UC-ID) which may be composed of RNC-ID and C-ID. In addition, the GPS enabled WCDMA handset 110 may send a determined position to the network location server 160. The determined handset position and corresponding RNC-ID provided to the network location server 160 may be utilized to determine an estimated RNC 132 serving area.

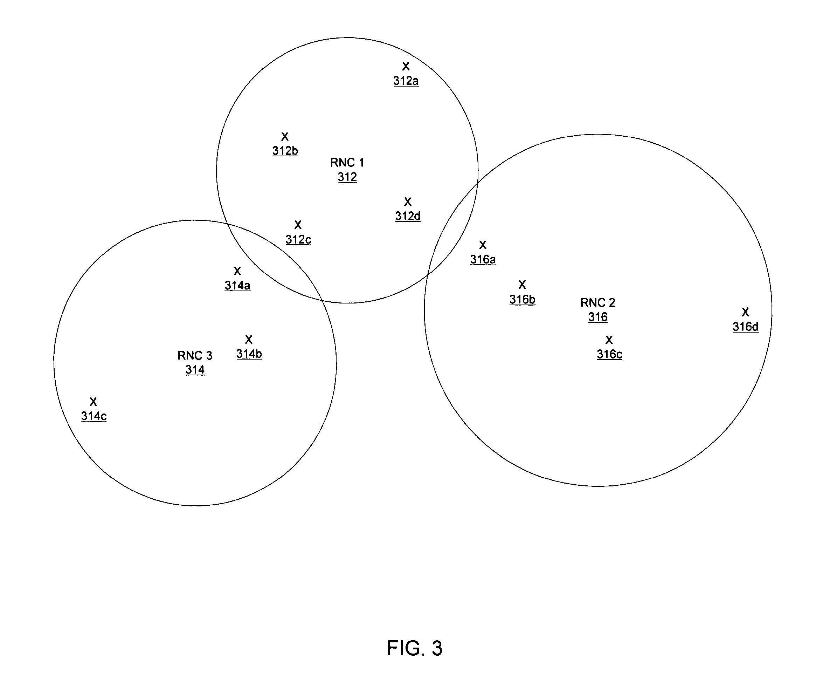

FIG. 3 is a diagram illustrating estimated locations and uncertainty for three RNC serving areas, in accordance with an embodiment of the invention. Referring to FIG. 3, there is shown three estimated RNC locations 312, 314 and 316. In addition, three areas of uncertainty are indicated by 312u, 314u and 316u. Determined handset locations are indicated by 312a, 312b, 312c, 312d, 314a, 314b, 314c, 316a, 316b, 316c and 316d.

Although RNCs may be remotely located from handsets and cell sites, a cluster of WCDMA cell sites may be served by an RNC and the collective geographic serving area of the cluster of WCDMA cell sites may be defined as the geographic serving area of the RNC. Moreover, the geographic serving area of the remote RNC may be estimated by geographically locating handsets served by the RNC and the corresponding cluster of cell sites. Referring to FIG. 3, the estimated RNC locations 312, 314 and 316 may each represent an average latitude and longitude of a plurality of handset locations 312a, 312b, 312c, 312d, 314a, 314b, 314c, 316a, 316b, 316c and 316d determined while being served by RNCs corresponding to the estimated RNC locations 312, 314 and 316. For example, the estimated RNC location 312 may be a latitude and longitude determined based on the determined handset locations 312a, 312b, 312c, 312d. Moreover, the uncertainty 312a may be a length of a radius originating at the latitude and longitude of the estimated RNC location 312 and may indicate an estimated serving area for the RNC 312. In various embodiments of the invention, the uncertainty may be based on a distance from the estimated RNC latitude and longitude and a nearest determined handset location for a handset served by a differnet RNC. In a somewhat similar manner, the estimated RNC locations 314 and 316 and respective serving area are depicted.

In operation, the network location server 160 described with respect to FIG. 1, may determine estimated RNC serving area 312 based on determined handset locations. The handset locations may be determined by a plurality of handsets. During location determination exchanges between the handsets and the location server 160, the handsets may indicate an RNC-ID corresponding to their serving RNC 312 as a parameter. In addition, the handsets may report a latitude and longitude for their location. The location server 160 may estimate a location for the serving area of the RNC 312 based on the reported handset locations. For example, the location server 160 may average the reported latitudes and longitudes corresponding to the serving RNC 312. In addition, the network location server 160 may determine an uncertainty for the estimated RNC 312 serving area. An exemplary uncertainty may be represented by the length of a radius that may define an area around the average latitude and longitude corresponding to the serving RNC 312. The location server 160 may populate a database with the estimated RNC 312 serving area information such as average latitude and longitude and an uncertainty value. In addition, the location server 160 may populate the database with an RNC-ID or area code associated with the RNC 312 location information. In this regard, the RNC location and uncertainty value may be utilized as a reference position for WCDMA handsets while the handsets are being served by the RNC 312.

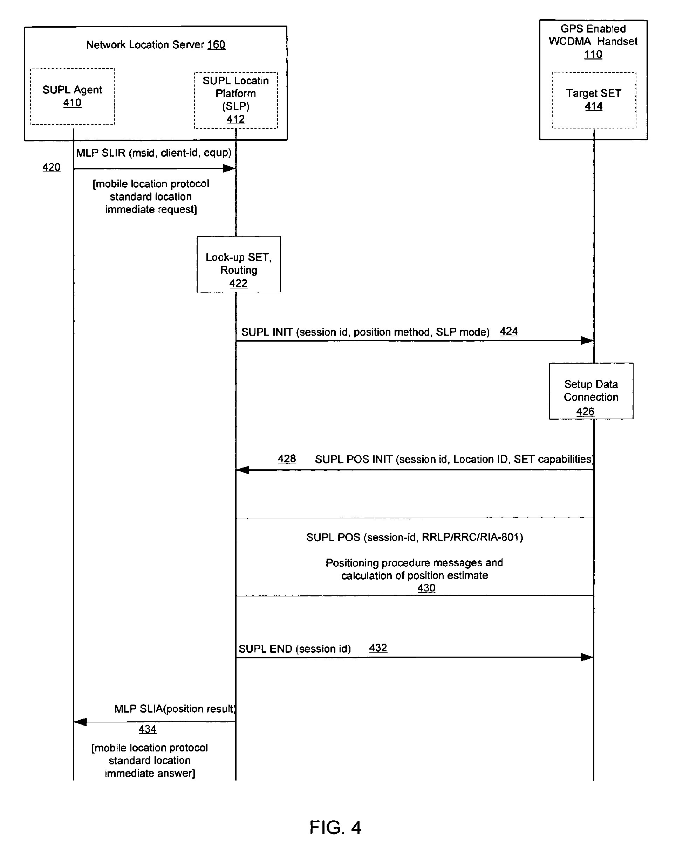

FIG. 4 is a flow diagram illustrating an exemplary network initiated location determination exchange comprising RNC-ID and location data and utilizing a SUPL interface, in accordance with an embodiment of the invention. Referring to FIG. 4, there is shown the network location server 160, a secure user plan location (SUPL) agent 410, a SUPL location platfrom (SLP) 412, GPS enabled WCDMA handset 110 and a target SET 416.

A SUPL interface may be utilized for exchanging location data between a SUPL enabled terminal (SET) 414 and a SUPL network, for example, the network location server 160. The SET 414 may be similar and/or substantially the same as the GPS enabled WCDMA handset 110. Functionality provided by the SUPL agent 410 may be utilized by a mobile location services (MLS) application to access network resources during location determination activity. Functionality provided by the SUPL location platform (SLP) 412 within the network location server 160 may be responsible for SUPL service management such as establshing a secure connection and for determining a handset location. For network initiated location requests, the MLS application and SUPL agent 410 functionality may be instantiated within the network location server 160 and may request and/or consume location information from the GPS enabled WCDMA handset 110. In this regard, a determined handset location and an RNC-ID corresponding to an RNC serving the handset at the time of locating the handset, may be communicated to the network location server 160 from the GPS enabled WCDMA handset 110. Notwithstanding the SUPL methods described herein, the invention is not limited to any specific location determination interface and may utilize any suitable user plane and/or control plane methods for exchanging RNC-ID and location information.

In step 420, within the network location server 160, the SUPL agent 410 may issue a moblie location protocol standard location immediate request, MLP SLIR message, to the GPS enabled WCDMA handset 110. In step 422, the SLP 412 may verify SUPL capability of the GPS enabled WCDMA handset 110 and determine roaming status. In step 424, a location session may be initiated with the GPS enabled WCDMA handset 110. In step 426, the GPS enabled WCDMA handset 110 may connect to a packet data network or establish a circuit switched connection. In step 428, the GPS enabled WCDMA handset 110 may issue a SUPL POS INIT to establish a secure IP session with the SLP 412. In addition, SUPL POS INIT parameters may indicate handset location method capabilities and positioning protocols supported by the GPS enabled WCDMA handset 110. Moreover, the SUPL POS INIT parameters may comprise a current Location ID for the GPS enabled WCDMA handset 110 that may comprise a cell site idendtifier and RNC idendifier (ID). In this manner the RNC-ID may be stored in a database by the network location server 160 and may be utilized for determining or improving an estimated RNC location and/or serving area.

The RNC-ID may be utilized to look up the estimated RNC location in the database. Furthermore, the network location server 160 may utilize the estimated RNC location as a coarse location for the GPS enabled WCDMA handset 110 or may utilize it to retrieve AGPS data from the AGPS server 140. In some instances, depending on the quality of position requested, a course position based on the RNC-ID may be adaquate for a location result. In step 430, the SLP 412 may determine the positioning method and protocol and may exchange a plurality of positioning procedure messages with the GPS enabled WCDMA handset 110. The SLP 412 may determine a handset position estimate based on measuements received from the GPS enabled WCDMA handset 110 or, the GPS enabled WCDMA handset 110 may determine a handset position estimate based on AGPS data from the SLP 412. The SLP 412 may utilize the handset position estimate to improve the RNC location estimate and may store the new or improved RNC location estimate and associated RNC-ID in the database. In step 432, the SLP 412 may send a SUPL END message to the GPS enabled WCDMA handset 110 indicating that the position procedure is finished. The GPS enabled WCDMA handset 110 may release the session and session resources. In step 434, the SLP 412 may provide the handset location estimate to the SUPL agent 410 and MLS application and may release resources related to the session.

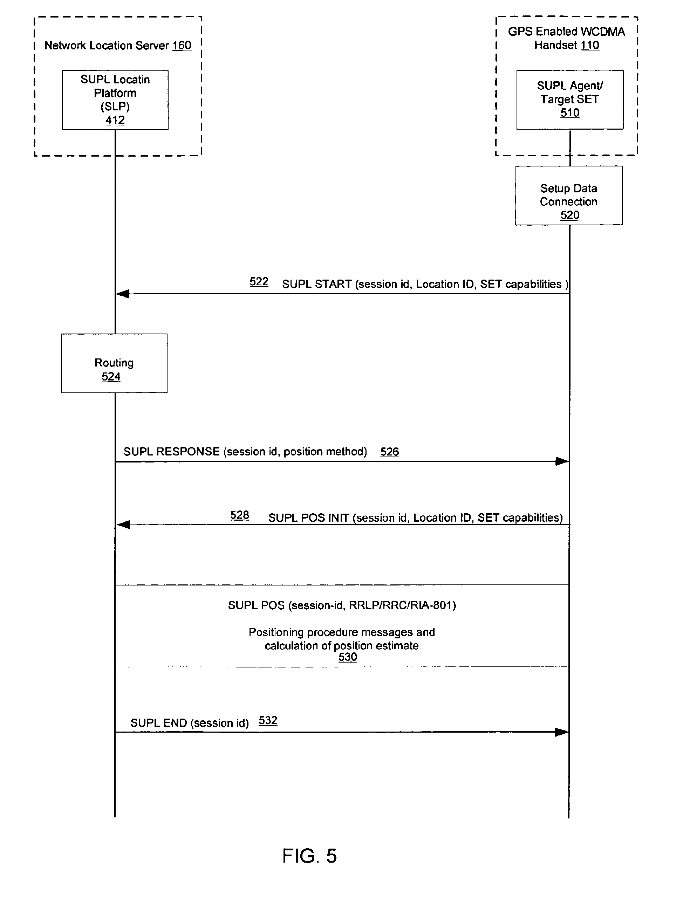

FIG. 5 is a flow diagram illustrating an exemplary handset initiated location determination exchange comprising RNC-ID and location data and utilizing a SUPL interface, in accordance with an embodiment of the invention. Referring to FIG. 5, there is shown the GPS enabled WCDMA handset 110, a SUPL agent and SET 510, a SUPL location platfrom (SLP) 412 and the network location server 160.

In this exemplary embodiment of the invention, the SUPL agent 510 and MLS application may be instantiated within the GPS enabled WCDMA handset 110. In step 520, the SUPL agent and SET 510 may receive a request for positioning from an MLS application that may be running on the GPS enabled WCDMA handset 110. The GPS enabled WCDMA handset 110 may connect to a packet data network service or establish a circuit switched connection. In step 522, the GPS enabled WCDMA handset 110 may establish a secure connection and may issue a SUPL START message to the location network server 160 that may comprise an RNC-ID within a location ID that may correspond with an RNC serving the GPS enabled WCDMA handset 110. In step 524, the SLP 412 functionality within the network location server 160 may determine whether the GPS enabled WCDMA handset 110 is roaming. In step 526, the SLP 412 may determine a position method and postion protocol. In addition, the SLP 412 may issue a SUPL RESPONSE message to the GPS enabled WCDMA handset 110 comprising the determined postion method. Moreover, the location network server 160 may store an RNC-ID extracted from the received location ID, within a database.

The RNC-ID may be utilized for determining or improving an estimated RNC location and/or serving area. In addition, the received RNC-ID may be utilized to look up an estimated RNC location in the database and may utilize the estimated RNC location as a coarse location for the GPS enabled WCDMA handset 110. Furthermore, the network location server 160 may utilize the received RNC-ID to retrieve AGPS data from the AGPS server 140. In some instances, depending on the quality of position requested, a course position based on the RNC-ID may be adaquate for a location result. In step 528, GPS enabled WCDMA handset 110 may issue a SUPL POS INIT which may again provide an RNC-ID which may be utilzed by the SLP 412 to determine a coarse handset position and/or to retreive assistance information from the AGPS server 140. In step 530, the SLP 412 may exchange a plurality of positioning procedure messages with the GPS enabled WCDMA handset 110.

The SLP 412 may determine a handset position estimate based on measuements received from the GPS enabled WCDMA handset 110 or, the GPS enabled WCDMA handset 110 may determine a handset position estimate based on AGPS data from the SLP 412. The SLP 412 may utilize the handset position estimate to improve the RNC location estimate and may store the new or improved RNC location estimate and associated RNC-ID in the database. In step 532, the SLP 412 may send a SUPL END message to the GPS enabled WCDMA handset 110 that may comprise the position result, depending on which location method was used, and may indicate that the position procedure is finished. The GPS enabled WCDMA handset 110 may release the session and session resources. The SLP 412 may release resources related to the session.

In an exemplary embodiment of the invention, an estimated RNC serving location and area of uncertainty may be utilized as a reference location and/or a coarse handset location result when determining a location of a GPS enabled WCDMA handset 110 that may be served by the RNC 132. In this regard, a database within a network location server 160 may be populated with an RNC-ID. The RNC-ID may be associated, within the database, with a corresponding estimated RNC 132 serving location and RNC 132 serving location uncertainty.

The estimated RNC 132 serving location and RNC 132 serving location uncertainty may be determined and/or improved based upon one or more reported handset locations. For example, the estimated RNC 132 serving location and uncertainty may be determined based upon an average of one or more reported handset locations from one or more handsets while being served by the RNC 132. Moreover, the estimated RNC 132 serving location and RNC 132 serving location uncertainty may be improved upon as additional handset locations for one or more handsets served by the RNC 132 are reported. An estimated RNC 132 serving location and uncertainty may comprises a latitude, longitude and an uncertainty value. For example, the uncertainty value may represent the length of a radius extending from the latitude and longitude that may define the area of a circle around the estimated RNC 132 latitude and longitude.

In various embodiments of the invention, the estimated RNC 132 serving location and the RNC 132 serving location uncertainty may be retrieved from the database based on a specified RNC-ID and/or an area code based on an RNC-ID. In this regard, the RNC-ID corresponding to the serving RNC132 may be communicated within a request for location determination and/or in a report of a determined location for a GPS enabled WCDMA handset 110. For example, the RNC-ID may be embedded within a location ID along with, for example, a cell-ID, mobile network code (MNC) and/or mobile country code (MCC). The estimated RNC 132 serving location and the RNC 132 serving location uncertainty may be utilized when retrieving assistance from the AGPS server 140 for determining a location of a GPS enabled WCDMA handset 110 that may be served by the respective RNC 132. In this manner, the estimated RNC 132 serving location and uncertainty may be utilized as a reference location and/or a coarse handset 110 location when determining the location of a GPS enabled WCDMA handset 110.

In another embodiment of the invention, a global navigation satellite system (GNSS) 120 enabled WCDMA handset 110 may be enabled to receive a reference location and/or GNSS assistance data from a network location server 160. The reference location and/or GNSS assistance data may be determined by the network location server 160 based on a geographic service area and/or area of uncertainty of a radio network controller (RNC) 132 serving the GNSS enabled WCDMA handset 110. The network location server 160 may acquire information utilized to determine the geographic service area of the RNC 132 and/or the area of uncertainty from an assistance server 140.

The GNSS enabled WCDMA handset 110 may be enabled to determine a location of the GNSS enabled WCDMA handset 110 based on the received reference location and/or GNSS assistance data. In this regard, the GNSS enabled WCDMA handset 110 may generate a location request comprising an identifier of the RNC 132. The geographic service area of the RNC 132 and/or the area of uncertainty may be determined by the network location server 160 based on an average of a plurality of reported locations of handsets served by the serving RNC 132. In this regard, the plurality of handset location reports may comprise an identifier of the serving RNC 132. An accuracy of the geographic service area of the RNC 132 and/or the area of uncertainty may be increased based on reported locations of one or more handsets served by the serving RNC 132. The geographic service area of the RNC 132 and/or the area of uncertainty may comprise one or more of a latitude, a longitude and uncertainty value.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for area code rough initial position for GNSS assistance data in a communication network.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for communication, the method comprising:
receiving from a network location server by a GNSS enabled WCDMA handset, a reference location and/or GNSS assistance data wherein said reference location and/or GNSS assistance data is determined by said network location server based on a geographic service area of an RNC serving said GNSS enabled WCDMA handset and/or area of uncertainty for said RNC; and
determining a location of said GNSS enabled WCDMA handset based on said received reference location and/or GNSS assistance data.

2. The method according to claim 1, wherein said geographic service area of said RNC and/or said area of uncertainty for said RNC are determined by said network location server based on an average of a plurality of reported locations of handsets served by said serving RNC.

3. The method according to claim 2, wherein said plurality of reported locations of handsets comprises an identifier of said serving RNC.

4. The method according to claim 1, wherein an accuracy of said geographic service area of said RNC and/or said area of uncertainty for said RNC are increased based on reported locations of one or more handsets served by said serving RNC.

5. The method according to claim 1, wherein said geographic service area of said RNC and/or said area of uncertainty for said RNC comprises one or more of a latitude, a longitude and uncertainty value.

6. The method according to claim 1, comprising acquiring said geographic service area of said RNC and/or said area of uncertainty for said RNC based on a an ID and/or an RNC-ID area code.

7. A machine-readable storage having stored thereon, a computer program having at least one code section for communication, the at least one code section being executable by a machine for causing the machine to perform steps comprising:
receiving from a network location server by a GNSS enabled WCDMA handset, a reference location and/or GNSS assistance data wherein said reference location and/or GNSS assistance data is determined by said network location server based on a geographic service area of an RNC serving said GNSS enabled WCDMA handset and/or area of uncertainty for said RNC; and
determining a location of said GNSS enabled WCDMA handset based on said received reference location and/or GNSS assistance data.

8. A system for communication, the system comprising:
one or more processors in a GNSS enabled WCDMA handset, wherein said one or more processors are operable to receive from a network location server, a reference location and/or GNSS assistance data wherein said reference location and/or GNSS assistance data is determined by said network location server based on a geographic service area of an RNC serving said GNSS enabled WCDMA handset and/or area of uncertainty for said RNC; and
said one or more processors are operable to determine a location of said GNSS enabled WCDMA handset based on said received reference location and/or GNSS assistance data.

9. The system according to claim 8, wherein said geographic service area of said RNC and/or said area of uncertainty for said RNC are determined by said network location server based on an average of a plurality of reported locations of handsets served by said serving RNC.

10. The system according to claim 9, wherein said plurality of reported locations of handsets comprise an identifier of said serving RNC.
